(19) Europäisches Patentamt
European Patent Office
Office européen des brevets

(11) **EP 2 452 988 A1**

(12) **EUROPEAN PATENT APPLICATION**
published in accordance with Art. 153(4) EPC

(43) Date of publication:
**16.05.2012 Bulletin 2012/20**

(51) Int Cl.:
*C09D 11/00* (2006.01)  *B41J 2/01* (2006.01)
*B41M 5/00* (2006.01)  *C08G 18/32* (2006.01)

(21) Application number: **10796986.7**

(86) International application number:
**PCT/JP2010/059835**

(22) Date of filing: **10.06.2010**

(87) International publication number:
**WO 2011/004675 (13.01.2011 Gazette 2011/02)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **09.07.2009 JP 2009162675**

(71) Applicant: **DIC Corporation**
**Tokyo 174-8520 (JP)**

(72) Inventor: **NAGAHAMA Sadamu**
**Takaishi-shi**
**Osaka 592-0001 (JP)**

(74) Representative: **Adam, Holger**
**Kraus & Weisert**
**Patent- und Rechtsanwälte**
**Thomas-Wimmer-Ring 15**
**80539 München (DE)**

(54) **BINDER FOR INK-JET PRINTING INK, INK-JET PRINTING INK CONTAINING SAME, AND PRINTED MATTER**

(57) The present invention relates to a binder for an ink-jet printing ink, the binder containing an aqueous medium (D); and a polyurethane (C) having a weight-average molecular weight of 30,000 to 200,000 and obtained by reacting a polyol (A) containing an alicyclic structure-containing polyol (a1) and a hydrophilic group-containing polyol (a2) with a polyisocyanate (B), the polyurethane (C) being dispersed in the aqueous medium (D), wherein a ratio of an alicyclic structure contained in the polyurethane (C) relative to the total mass of the polyurethane (C) is 1,000 to 5,500 mmol/kg, an ink-jet printing ink containing the binder, and printed matter.

EP 2 452 988 A1

**Description**

Technical Field

The present invention relates to a binder for an ink that can be used in ink-jet printing, and an ink-jet printing ink containing the same.

Background Art

Recently, realization of high-performance ink-jet printers, improvement of inks, and the like have markedly advanced in the ink-jet printing-related industry, which has been significantly growing, and images having high glossiness and high definition, which are substantially equivalent to silver halide prints, have been able to be easily obtained even in ordinary households.

In particular, for inks, improvements for the purpose of realizing high image quality and reducing the environmental burden, for example, a transition from existing dye-based inks to pigment-based inks and a transition from solvent-based inks to water-based inks have been rapidly achieved. Recently, inks containing a water-based pigment ink as a main component have been actively developed.

Furthermore, with the realization of high-performance ink-jet printers and the like, performance at increasingly higher levels has been required for inks year by year. For example, in addition to satisfactory ejection stability of inks, high glossiness of printed images, and the like, recently, there has been a strong desire for abrasion resistance at a level at which it is possible to prevent discoloration and degradation of a printed image due to removal of a pigment, the discoloration and degradation being caused by friction which may be caused when an external force is applied to a surface of the printed image, and durability, such as chemical resistance, at a level at which blurring and discoloration are not caused when a. cleaning agent such as a glass cleaner adheres to a surface of the printed image.

A known example of such an ink having excellent abrasion resistance is an ink for ink-jet recording containing a pigment, an aqueous resin, and an aqueous medium, in which the aqueous resin is a polyurethane resin obtained by reacting an organic diisocyanate with a diol having a polyoxyethylene structure, and the polyurethane resin has a carboxyl group, a specific acid value, a specific number-average molecular weight, and a specific amount of the polyoxyethylene structure (refer to, for example, Patent Literature 1).

Images obtained by printing using the above ink for ink-jet recording have a certain degree of abrasion resistance, and thus, for example, detachment of a pigment due to friction between sheets can be prevented.

However, with the expansion of the field of use of ink-jet printed matter, abrasion resistance at an even higher level has been desired. Under such circumstances, in a printed image formed using the above-described ink for ink-jet recording, discoloration, degradation, and damaging of the printed image due to detachment of a pigment or the like may be still caused when a strong external force is locally applied to the printed image, for example. In addition, for example, when an alkaline cleaning agent or the like adheres to a surface of an image obtained by printing using the above-described ink for ink-jet recording, there may occur a problem that floating and blurring are generated on the printed surface.

As described above, although an ink-jet printing ink that has both excellent abrasion resistance and excellent alkali resistance and that can form a highly glossy printed image has been desired from the industry, an ink-jet printing ink having these properties and a binder for an ink--jet printing ink, the binder being capable of being used in producing the ink, have not yet been found.

Citation List

Patent Literature

PTL 1: Japanese Unexamined Patent Application Publication No. 2000-1639

Summary of Invention

Technical Problem

An object of the present invention is to provide a binder for an ink-jet printing ink that has both excellent abrasion resistance and alkali resistance at a very high level and that can form a highly glossy printed image without impairing ejection stability of the ink, and an ink-jet printing ink containing the binder.

Solution to Problem

In order to solve the above problem, the inventor of the present invention and others have conducted studies on various aqueous polyurethanes. In these studies, introduction of an alicyclic structure in an aqueous polyurethane has been studied. Specifically, polyurethanes obtained by reacting a polyol with, as a polyisocyanate used in the production of an aqueous polyurethane, an alicyclic structure-containing polyisocyanate such as isophorone diisocyanate or hydrogenated diphenylmethane diisocyanate have been studied.

By using an ink-jet printing ink containing the above polyurethane, printed images having relatively good abrasion resistance and high glossiness could be formed. However, these images do not quite reach the very high level that has been recently desired from the industry, and the alkali resistance thereof may not be sufficient for practical use.

Meanwhile, the inventor of the present invention and others believed that it is effective to use a polyurethane having a molecular weight relatively higher than that of existing polyurethanes in order to form a printed image having excellent abrasion resistance, and examined the use of a polyurethane having a weight-average molecular weight of several tens of thousands or more in a binder for an ink-jet printing ink.

However, an ink obtained by using the above binder for an ink-jet printing ink was insufficient in terms of storage stability, which might result in clogging of an ink ejection nozzle of an ink-jet printer, deviation of the ejection direction, and a decrease in sharpness and glossiness of printed images.

In studies on various configurations of a binder resin as described above, it was found that printed images having excellent abrasion resistance and alkali resistance can be formed using a binder for an ink-jet printing ink, the binder containing a polyurethane (C) that satisfies all the conditions that the polyurethane has an alicyclic structure in a specified amount of 1,000 to 5,500 mmol/kg, that an alicyclic structure-containing polyol such as cyclohexanedimethanol is essentially used when the alicyclic structure is introduced in the polyurethane, and that the polyurethane has a weight-average molecular weight in a specific range of 30,000 to 200,000.

Specifically, the present invention relates to a binder for an ink-jet printing ink, the binder containing an aqueous medium (D) ; and a polyurethane (C) having a weight-average molecular weight of 30,000 to 200,000 and obtained by reacting a polyol (A) containing an alicyclic structure-containing polyol (a1) and a hydrophilic group-containing polyol (a2) with a polyisocyanate (B), the polyurethane (C) being dispersed in the aqueous medium (D), wherein a ratio of an alicyclic structure contained in the polyurethane (C) relative to the total mass of the polyurethane (C) is 1,000 to 5,500 mmol/kg.

Advantageous Effects of Invention

According to an ink-jet printing ink containing the binder for an ink-jet printing ink of the present invention, even if a strong external force is applied, a printed image with high definition can be maintained without causing detachment of a pigment and the like, and abrasion resistance that is substantially equivalent to that of a silver halide print, and excellent alkali resistance can be imparted. Furthermore, in the case where the content of the alicyclic structure is in a certain specific range, excellent alcohol resistance can also be imparted. Accordingly, for example, printed matter obtained by photographic printing by ink-jet printing or high-speed printing by ink-jet printing can be used in various situations such as for outdoor advertisement.

Description of Embodiments

The present invention provides a binder for an ink-jet printing ink, the binder containing an aqueous medium (D), a polyurethane (C) having a weight-average molecular weight of 30,000 to 200,000 and obtained by reacting a polyol (A) containing an alicyclic structure-containing polyol and a hydrophilic group-containing polyol (a2) with a polyisocyanate (B), and other optional components, the polyurethane (C) and the other optional components being dissolved or dispersed in an aqueous medium (D), wherein a ratio of an alicyclic structure contained in the polyurethane (C) relative to the total mass of the polyurethane (C) is 1,000 to 5,500 mmol/kg.

First, a polyurethane (C) used in the present invention will be described.

The polyurethane (C) used in the present invention is obtained by reacting a polyol (A) containing an alicyclic structure-containing polyol (a1) and a hydrophilic group-containing polyol (a2) with a polyisocyanate (B).

In order to achieve excellent abrasion resistance, alkali resistance, and ejection stability for an ink, it is essential that the polyurethane (C) have an alicyclic structure in an amount of 1,000 to 5,500 mmol/kg relative to the total mass of the polyurethane (C). Here, when a polyurethane having an alicyclic structure in an amount of more than 5,500 mmol/kg is used instead of the polyurethane (C), ejection stability of the ink tends to decrease. In addition, from the standpoint of achieving both excellent abrasion resistance and alkali resistance, the alicyclic structure is preferably present in the polyurethane (C) in an amount of at least 1,000 mmol/kg.

In particular, in order to maintain ejection stability and storage stability of the ink for a long time, and to impart more satisfactory alcohol resistance in addition to more excellent abrasion resistance and alkali resistance, it is more preferable to use a polyurethane having an alicyclic structure in an amount in the range of 1,500 to 4,000 mmol/kg as the polyurethane (C).

Furthermore, it is essential that the alicyclic structure contained in the polyurethane (C) include an alicyclic structure derived from the alicyclic structure-containing polyol (a1) capable of being used as the polyol (A) used in producing the polyurethane (C). Here, even when a polyurethane having a proportion of an alicyclic structure of 1,000 to 5,500 mmol/kg and obtained by using, as the polyisocyanate (B), a predetermined amount of an alicyclic structure-containing polyisocyanate without using the alicyclic structure-containing polyol (a1) is used instead of the polyurethane (C), it may not be possible to obtain a binder for an ink-jet printing ink that can form printed images having excellent abrasion resistance and excellent chemical resistance such as alkali resistance and alcohol resistance.

Accordingly, from the standpoint of obtaining a binder for an ink--jet printing ink that can form printed images having excellent abrasion resistance and alkali resistance, a polyurethane having an alicyclic structure derived from the alicyclic structure-containing polyol (a1) in an amount preferably in the range of 50 to 5,500 mmol/kg, more preferably in the range of 300 to 4,000 mmol/kg, and particularly preferably in the range of 300 to 3,500 mmol/kg relative to the total mass of the polyurethane (C) is used as the polyurethane (C).

Regarding the alicyclic structure contained in an amount of 1,000 to 5,500 mmol/kg in the polyurethane (C), all the alicyclic structures need not be derived from the alicyclic structure-containing polyol (a1). Some of the alicyclic structures may be derived from an alicyclic structure-containing polyisocyanate such as isophorone diisocyanate.

For example, even in the case where the amount of alicyclic structure derived from the alicyclic structure-containing polyol (a1) is less than 1,000 mmol/kg, more specifically, 500 mmol/kg or more and less than 1,000 mmol/kg, it is possible to obtain a binder for an ink-jet printing ink that can form printed images having excellent abrasion resistance and alkali resistance as long as an alicyclic structure can be introduced in the polyurethane (C) in an amount of 1,000 to 5,500 mmol/kg by using, as the polyisocyanate (B) described below, an alicyclic structure-containing polyisocyanate or the like in combination.

Note that, herein, the ratio of an alicyclic structure contained in the polyurethane (C) to the total mass of the polyurethane (C) refers to a value calculated on the basis of the total mass of all materials, such as the polyol (A) and the polyisocyanate (B), which are used in the production of the polyurethane (C) and the amount of substances of alicyclic structures contained in alicyclic structure-containing compounds used in the production of the polyurethane (C).

Examples of the alicyclic structure that can be used include a cyclobutyl ring, a cyclopentyl ring, a cyclohexyl ring, a cycloheptyl ring, a cyclooctyl ring, a propylcyclohexyl ring, a tricyclo[5.2.1.0.2.6]decyl skeleton, a bicyclo[4.3.0]-nonyl skeleton, a tricyclo[5.3.1.1]dodecyl skeleton, a propyltricyclo[5.3.1.1]dodecyl skeleton, a norbornene skeleton, an isobornyl skeleton, a dicyclopentanyl skeleton, and an adamantyl skeleton. Among these, a cyclohexyl ring structure is preferable.

It is important to use a polyurethane having a weight-average molecular weight of 30,000 to 200,000 as the polyurethane (C) from the standpoint of forming printed images having excellent abrasion resistance and alkali resistance and imparting satisfactory water dispersion stability. Here, when a polyurethane having a weight-average molecular weight of more than 200,000 is used instead of the polyurethane (C), both excellent abrasion resistance and alkali resistance cannot be achieved, and a decrease in stability in the aqueous medium (D), clogging of an ink ejection nozzle, etc. may be caused. When a polyurethane having a weight-average molecular weight of less than 30,000 is used instead of the polyurethane (C), both excellent abrasion resistance and alkali resistance may not be achieved.

Accordingly, from the standpoint of forming printed images having excellent abrasion resistance and alkali resistance and imparting satisfactory water dispersion stability, the polyurethane (C) used has a weight-average molecular weight preferably in the range of 30,000 to 100,000, more preferably in the range of 30,000 to 90,000, and still more preferably in the range of 35,000 to 85,000.

In addition, the polyurethane (C) can be dispersed in the aqueous medium (D) and has a hydrophilic group.

An anionic group, a cationic group, or a nonionic group can be used as the hydrophilic group. Among these, an anionic group is more preferably used.

Examples of the anionic group that can be used include a carboxyl group, a carboxylate group, a sulfonic acid group, and a sulfonate group. Among these, it is preferable to use carboxylate groups or sulfonate groups obtained by neutralizing some of or all of the carboxyl groups or the sulfonic acid groups with a basic compound or the like, from the standpoint of imparting satisfactory water dispersion stability.

As the cationic group, for example, a tertiary amino group can be used.

The hydrophilic group is present preferably in the range of 50 to 1,000 mmol/kg and more preferably 200 to 600 mmol/kg relative to the total amount of the polyurethane (C) from the standpoint of maintaining satisfactory water dispersion stability.

As described above, the polyurethane (C) can be produced by reacting the polyol (A) containing the alicyclic structure-containing polyol (a1) and the hydrophilic group-containing polyol (a2) with the polyisocyanate (B).

As the alicyclic structure-containing polyol (a1) used in the production of the polyurethane (C), an alicyclic structure-containing polyol (a1-1) having a low molecular weight of about 100 to 500 can be used. Examples of the alicyclic structure-containing polyol (a1-1) include cyclobutanediol, cyclopentanediol, 1,4-cyclohexanediol, cycloheptanediol, cyclooctanediol, cyclohexanedimethanol, hydroxypropyl cyclohexanol, tricyclo[5.2.1.0.2.6]decane-dimethanol, bicyclo[4.3.0]-nonanediol, dicyclohexanediol, tricyclo[5.3.1.1]dodecanediol, bicyclo[4.3.0]nonanedimethanol, tricycle[5.3.1.1]dodecane-diethanol, hydroxypropyltricyclo[5.3.1.1]dodecanol, spiro[3.4]octanediol, butylcyclohexanediol, 1,1'-bicyclohexylidenediol, cyclohexanetriol, hydrogenated bisphenol A, and 1,3-adamantanediol. Note that the molecular weight of the alicyclic structure-containing polyol (a1-1) is based on the formula weight.

Furthermore, as the alicyclic structure-containing polyol (a1), alicyclic structure-containing polycarbonate polyols, alicyclic structure-containing polyester polyols, and alicyclic structure-containing polyether polyols, all of which are obtained by reacting the alicyclic structure-containing polyol (a1-1) with another component, may be used alone or in combination of two or more polyols.

As the alicyclic structure-containing polycarbonate polyol, for example, it is possible to use a polycarbonate polyol obtained by a reaction between the alicyclic structure-containing polyol (a1-1) having a low molecular weight and dimethyl carbonate, phosgene, or the like.

As the alicyclic structure-containing polycarbonate polyol, an alicyclic structure-containing polycarbonate polyol (a1-2) having a number-average molecular weight preferably in the range of 800 to 3,000 and more preferably in the range of 800 to 2,000 is used.

As the alicyclic structure-containing polyester polyol, for example, it is possible to use polyester a polyol obtained by an esterification reaction between the alicyclic structure-containing polyol (a1-1) having a low molecular weight and a polycarboxylic acid.

As the alicyclic structure-containing polyether polyol, for example, it is possible to use a polyether polyol obtained by addition polymerization of an alkylene oxide such as ethylene oxide or propylene oxide using, as an initiator, the alicyclic structure-containing polyol (a1-1) having a low molecular weight.

As the alicyclic structure-containing polyol (a1), the alicyclic structure-containing polyol (a1-1) having a molecular weight of 100 to 500 and/or the alicyclic structure-containing polycarbonate polyol (a1-2) having a number-average molecular weight of 800 to 3,000 is preferably used from the standpoint of imparting excellent abrasion resistance and alkali resistance. More specifically, it is preferable to use 1,4-cyclohexanedimethanol as the alicyclic structure-containing polyol (a1-1) and to use any of polycarbonate polyols obtained by reacting 1,4-cyclohexanedimethanol or 1,6-cyclohexanediol with dimethyl carbonate, phosgene, or the like as the alicyclic structure-containing polycarbonate polyol (a1-2). These polyols may be used alone or in combination.

As described above, the alicyclic structure derived from the alicyclic structure-containing polyol (a1) is present preferably in the range of 50 to 5,500 mmol/kg, more preferably in the range of 300 to 4,000 mmol/kg, and particularly preferably in the range of 300 to 3,500 mmol/kg relative to the total mass of the polyurethane (C). In the case where the alicyclic structure-containing polyol (a1-1) is used as the alicyclic structure-containing polyol (a1), from the standpoint of imparting satisfactory abrasion resistance and alkali resistance, the alicyclic structure derived from the alicyclic structure-containing polyol (a1-1) is present preferably in the range of 50 to 1,500 mmol/kg, more preferably in the range of 50 to 1,000 mmol/kg, and particularly preferably in the range of 300 to 1,000 relative to the total amount of the polyurethane (C).

On the other hand, in the case where the alicyclic structure-containing polycarbonate polyol (a1-2) is used as the alicyclic structure-containing polyol (a1), the alicyclic structure derived from the alicyclic structure-containing polycarbonate polyol (a1-2) is preferably present in the range of 500 to 4,500 mmol/kg.

The amount of alicyclic structure-containing polyol (a1) used varies depending on the amount of alicyclic structure to be introduced in the polyurethane (C), the combination of polyols constituting the polyol (A), the molecular weight of the polyol (A), etc. However, the amount of alicyclic structure-containing polyol (a1) used is preferably in the range of about 1% to 80% by mass relative to the total mass of the polyol (A) and the polyisocyanate (B) used in the production of the polyurethane (C).

As the hydrophilic group-containing polyol (a2), a polyol that does not have an alicyclic structure but that has a hydrophilic group can be used. Examples of the polyol (a2) that can be used include anionic group-containing polyols, cationic group-containing polyols, and nonionic group-containing polyols. Among these, anionic group-containing polyols are preferably used.

Examples of the anionic group-containing polyols that can be used include carboxyl group-containing polyols and sulfonic acid group-containing polyols.

Examples of the carboxyl group-containing polyols that can be used include 2,2'-dimethylol propionic acid, 2,2'-dimethylol butanoic acid, 2,2'-dimethylol butyric acid, and 2,2'-dimethylol valeric acid. Among these, 2,2'-dimethylol propionic acid is preferably used. Carboxyl group-containing polyester polyols obtained by reacting the carboxyl group-containing polyol with a polycarboxylic acid may also be used.

Examples of the sulfonic acid group-containing polyols that can be used include polyester polyols obtained by a reaction between a dicarboxylic acid such as 5-sulfoisophthalic acid, sulfoterephthalic acid, 4-sulfophthalic acid, or 5-[4-sulfophenoxy]isophthalic acid, a salt thereof, and the above-described polyol having a low molecular weight.

The carboxyl group-containing polyol and the sulfonic acid group-containing polyol are used so that the acid value of the polyurethane (C) becomes preferably in the range of 10 to 70 and more preferably in the range of 10 to 50. Note that the acid value used herein refers to a theoretical value calculated on the basis of the amount of acid group-containing compound, such as a carboxyl group-containing polyol, used in the production of the polyurethane (C).

Regarding the anionic groups, some of or all of the anionic groups are preferably neutralized with a basic compound or the like from the standpoint of expressing satisfactory water dispersibility.

Examples of the basic compound that can be used for neutralizing the anionic groups include ammonia and organic amines having a boiling point of 200°C or higher, such as triethylamine, morpholine, monoethanolamine, and diethylethanolamine; and metal hydroxides such as NaOH, KOH, and LiOH. From the standpoint of improving water dispersion stability of the resulting coating agent, the basic compound is used so that a ratio of basic compound/anionic group is preferably in the range of 0.5 to 3.0 (molar ratio) and more preferably in the range of 0.9 to 2.0 (molar ratio).

As the cationic group-containing polyols, for example, tertiary amino group-containing polyols can be used. Specific examples thereof include N-methyl-diethanolamine and polyols obtained by reacting a compound having two epoxy groups in one molecule with a secondary amine.

Regarding the cationic groups, some of or all of the cationic groups are preferably neutralized with an acidic compound such as formic acid, acetic acid, propionic acid, succinic acid, glutaric acid, tartaric acid, or adipic acid.

Regarding the tertiary amino groups serving as the cationic groups, some of or all of the tertiary amino group are preferably quaternized. Examples of the quaternizing agent that can be used include dimethyl sulfate, diethyl sulfate, methyl chloride, and ethyl chloride. Dimethyl sulfate is preferably used.

As the nonionic group-containing polyols, for example, polyalkylene glycols having a structural unit derived from ethylene oxide can be used.

The hydrophilic group-containing polyol (a2) is preferably used in an amount in the range of 2% to 20% by mass relative to the total amount of the polyol (A) and the polyisocyanate (B) used in the production of the polyurethane (C).

In addition to the alicyclic structure-containing polyol (a1) and the hydrophilic group-containing polyol (a2), if necessary, another polyol. (a3) may be used as the polyol (A) in combination.

As the other polyol (a3), for example, among polyether polyols, polycarbonates, polyol polyester polyols, and the like, polyols that do not have an alicyclic structure can be used. Polyols that have a relatively low molecular weight and that do not have an alicyclic structure may also be used.

From the standpoint of maintaining satisfactory storage stability of an ink-jet printing ink of the present invention and excellent ink ejection stability thereof, polyether polyols and polycarbonate polyols are preferably used as the other polyol (a3). Among these polyols, polyoxytetramethylene glycol and polypropylene glycol are particularly preferably used. The number-average molecular weight of the other polyol (a3) is preferably in the range of 500 to 3,000 and more preferably in the range, of 500 to 2,500.

From the standpoint of maintaining satisfactory storage stability of an ink-jet printing ink of the present invention and an excellent ink ejection property thereof, the other polyol (a3) is preferably used in an amount in the range of 15% to 80% by mass relative to the total amount of the polyols (A) and the polyisocyanate (B).

Examples of the polyisocyanate (B) that can be used in the production of the polyurethane (C) include aromatic polyisocyanates such as 4,4'-diphenylmethane diisocyanate, 2,4'-diphenylmethane diisocyanate, carbodiimide-modified diphenylmethane diisocyanate, crude diphenylmethane diisocyanate, phenylene diisocyanate, tolylene diisocyanate, and naphthalene diisocyanate; aliphatic polyisocyanates and polyisocyanates having an alicyclic structure, such as hexamethylene diisocyanate, lysine diisocyanate, cyclohexane diisocyanate, isophorone diisocyanate, dicyclohexylmethane diisocyanate, xylylene diisocyanate, and tetramethylxylylene diisocyanate. Among these, from the standpoint of preventing yellowing, aliphatic polyisocyanates are preferably used. From the standpoint of preventing the discoloration and further improving abrasion resistance and alkali resistance, alicyclic structure-containing polyisocyanates are preferably used.

The polyurethane (C) can be produced as follows. The polyol (A) containing the alicyclic structure-containing polyol (a1) and the hydrophilic group-containing polyol (a2) is reacted with the polyisocyanate (B) without solvent or in the presence of an organic solvent to produce a polyurethane. Subsequently, some of or all of the hydrophilic groups in the polyurethane are neutralized as required. When the resulting polyurethane is mixed in the aqueous medium (D) to make the polyurethane aqueous, as required, the polyurethane is mixed and reacted with a chain extender.

The reaction between the polyol (A) and the polyisocyanate (B) is conducted so that, for example, an equivalent ratio of the isocyanate group in the polyisocyanate (B) to the hydroxyl group in the polyol (A) is preferably in the range of 0.8 to 2.5 and more preferably in the range of 0.9 to 1.5.

Examples of the organic solvent that can be used in producing the polyurethane (C) include ketones such as acetone and methyl ethyl ketone; ethers such as tetrahydrofuran and dioxane; acetic acid esters such as ethyl acetate and butyl acetate; nitriles such as acetonitrile; and amides such as dimethylformamide and N-methylpyrrolidone. These organic solvents may be used alone or in combination with two or more solvents.

The polyurethane (C) used in the present invention has a relatively high molecular weight, namely, a weight-average molecular weight of 30,000 to 200,000, as described above, and thus the chain extender may be used in increasing the molecular weight of the polyurethane.

Since the polyurethane obtained by using the chain extender has a urea bond in its molecule, the polyurethane can be suitably used for forming a printed image having excellent abrasion resistance. On the other hand, in such a polyurethane, alcohol resistance tends to decrease due to the effect of the urea bond. Accordingly, in the case where a printed image having excellent alcohol resistance in addition to the abrasion resistance and alkali resistance, it is preferable to use, as the polyurethane (C), a polyurethane obtained without using a chain extender or a polyurethane obtained by using the minimum amount of a chain extender, specifically, a polyurethane containing a urea bond in a proportion of 10% by mass or less.

As the chain extender, for example, polyamines and other active hydrogen atom-containing compounds can be used in producing the polyurethane (C).

Examples of the polyamines include diamines such as ethylenediamine, 1,2-propanediamine, 1,6-hexamethylenediamine, piperazine, 2,5-dimethylpiperazine, isophoronediamine, 4,4'-dicyclohexylmethanediamine, 3,3'-dimethyl-4,4'-dicvclohexylmethanediamine, and 1,4-cyclohexanediamine; N-hydroxymethylaminoethylamine, N-hydroxyethylaminoethylamine, N-hydroxypropylaminopropylamine, N-ethylaminoethylamine, and N-methylaminopropylamine; diethylenetriamine, dipropylenetriamine, and triethylenetetramine; hydrazine, N,N'-dimethylhydrazine, and 1,6-hexamethylenebishydrazine; succinic acid dihydrazide, adipic acid dihydrazide, glutaric acid dihydrazide, sebacic acid dihydrazide, and isophthalic acid dihydrazide; and β-semicarbazide propionic acid hydrazide, 3-semicarbazide-propyl-carbazate, and semicarbazide-3-semicarbazidemethyl-3,5,5-trimethylcyclohexane. Among these, ethylenediamine is preferably used.

Examples of the other active hydrogen atom-containing compounds include glycols such as ethylene glycol, diethylene glycol, triethylene glycol, propylene glycol, 1,3-propanediol, 1,3-butanediol, 1,4-butanediol, hexamethylene glycol, saccharose, methylene glycol, glycerol, and sorbitol; phenols such as bisphenol A, 4,4'-dihydroxydiphenyl, 4,4'-dihydroxydiphenyl ether, 4,4'-dihydroxydiphenyl sulfone, hydrogenated bisphenol A, and hydroquinone; and water. These compounds can be used alone or in combination of two or more compounds as long as storage stability of the coating agent of the present invention does not decrease.

The chain extender is used so that, for example, the equivalent ratio of amino groups in a polyamine to excessive isocyanate groups is preferably 1.9 or less (equivalent ratio) and more preferably in the range of 0.3 to 1.0 (equivalent ratio).

The polyurethane (C) produced by the above method can be made aqueous by, for example, the following methods.

method 1] A method including neutralizing or quaternizing some of or all of hydrophilic groups in the polyurethane (C) obtained by a reaction between the polyol (A) and the polyisocyanate (B), then charging water to disperse the resulting polyurethane in water, and then conducting chain extension using the chain extender, thereby dispersing the polyurethane (C) in water.

[Method 2] A method including producing the polyurethane (C) by charging a polyurethane obtained by a reaction between the polyol (A) and the polyisocyanate (B) and the chain extender described above in a reactor either at one time or separately to conduct a chain extension reaction, then neutralizing or quaternizing some of or all of hydrophilic groups in the resulting polyurethane (C), and then charging water to disperse the polyurethane (C) in water.

In [Method 1] and [Method 2] described above, an emulsifier may be used as required. In dissolving in water or dispersing in water, a machine such as a homogenizer may be used as required.

Examples of the emulsifier include nonionic emulsifiers such as polyoxyethylene nonylphenyl ether, polyoxyethylene lauryl ether, polyoxyethylene styrylphenyl ether, polyoxyethylene sorbitol tetraoleate, and polyoxyethylene-polyoxypropylene copolymers; anionic emulsifiers such as fatty acid salts, e.g., sodium oleate, alkyl sulfuric acid ester salts, alkyl benzene sulfonates, alkyl sulfosuccinates, naphthalene sulfonates, polyoxyethylene alkyl sulfates, alkane sulfonate sodium salts, and sodium alkyldiphenylether sulfonates; and cationic emulsifiers such as alkylamine salts, alkyl trimethyl ammonium salts, and alkyl dimethyl benzyl ammonium salts. Among these, from the standpoint of maintaining excellent storage stability of the coating agent of the present invention, basically, anionic or nonionic emulsifiers are preferably used. Furthermore, as long as mixing stability of the coating agent of the present invention can be maintained, for example, a cationic emulsifier and an amphoteric emulsifier may be used in combination.

In producing the binder of the present invention, a hydrophilic group-containing compound may be used as an auxiliary agent that assists water dispersibility of the polyurethane (C).

Examples of the hydrophilic group-containing compound that can be used include anionic group-containing compounds, cationic group-containing compounds, amphoteric group-containing compounds, and nonionic group-containing compounds. From the standpoint of maintaining excellent storage stability of the coating agent of the present invention, nonionic group-containing compounds are preferably used.

As the nonionic group-containing compound, it is possible to use a compound having at least one active hydrogen atom in its molecule and having at least one functional group selected from the group consisting of a group composed of a repeating unit of ethylene oxide and a group composed of a repeating unit of ethylene oxide and a repeating unit of another alkylene oxide.

Examples of the compound that can be used include nonionic group-containing compounds such as polyoxyethylene glycol, polyoxyethylene-polyoxypropylene copolymer glycol, polyoxyethylene-polyoxybutylene copolymer glycol, polyoxyethylene-polyoxyalkylene copolymer glycol, all of which contain at least 30% by mass or more of a repeating unit of ethylene oxide and which have at least one active hydrogen atom in the polymer and a number-average molecular weight of 300 to 20,000, and monoalkyl ethers thereof; and compounds such as polyester polyether polyols obtained by copolymerizing these compounds.

The binder for an ink-jet printing ink of the present invention may further contain a curing agent and a curing catalyst if necessary, as long as storage stability and an ink ejection property are not decreased.

Examples of the curing agent that can be used include compounds having a silanol group and/or a hydrolyzable silyl group, polyepoxy compounds, polyoxazoline compounds, and polyisocyanates. Examples of the curing catalyst that can be used include lithium hydroxide, sodium hydroxide, and potassium hydroxide.

An aqueous medium (D) used in the binder for an ink-jet printing ink of the present invention is an aqueous medium in which the polyurethane (C) is dispersed. Examples of the aqueous medium (D) include water, organic solvents miscible with water, and mixtures thereof. Examples of the organic solvents miscible with water include alcohols such as methanol, ethanol, and n-propyl alcohol, and isopropyl alcohol; ketones such as acetone and methyl ethyl ketone; polyalkylene glycols such as ethylene glycol, diethylene glycol, and propylene glycol; alkyl ethers of polyalkylene glycols; and lactams such as N-methyl-2-pyrrolidone. In the present invention, only water may be used. Alternatively, a mixture of water and an organic solvent miscible with water may be used. Alternatively, only an organic solvent miscible with water may be used. From the standpoint of safety and the burden on the environment, the use of only water or the use of water and an organic solvent miscible with water is preferable, and the use of only water is particularly preferable.

The aqueous medium (D) is contained in an amount of preferably 50% to 90% by mass and more preferably 65% to 85% by mass relative to the total amount of the binder for an ink-jet printing ink.

A polyurethane composition containing the polyurethane (C) and the aqueous medium (D) and obtained by the method described above can significantly improve abrasion resistance and alkali resistance of printed matter, and thus can be suitably used in a dedicated manner as a binder resin of an ink-jet printing ink.

From the standpoint of achieving storage stability of the ink and excellent abrasion resistance and alkali resistance thereof, the polyurethane (C) is contained in an amount of preferably 10% to 50% by mass and more preferably 15% to 35% by mass relative to the total amount of the binder for an ink-jet printing ink.

Next, an ink-jet printing ink of the present invention will be described.

The ink-jet printing ink of the present invention contains the above-described binder for an ink-jet printing ink, a pigment or a dye, and, as required, various additives.

Well-known and commonly used inorganic pigments and organic pigments can be used as the pigment.

Examples of the inorganic pigments that can be used include titanium oxide, antimony red, colcothar, cadmium red, cadmium yellow, cobalt blue, prussian blue, ultramarine blue, carbon black, and graphite.

Examples of the organic pigments that can be used include quinacridone pigments, quinacridonequinone pigments, dioxazine pigments, phthalocyanine pigments, anthrapyrimidine pigments, anthanthrone pigments, indanthrone pigments, flavanthrone pigments, perylene pigments, diketopyrrolopyrrole pigments, perinone pigments, quinophthalone pigments, anthraquinone pigments, thioindigo pigments, benzimidazolone pigments, and azo pigments.

These pigments may be used in combination of two or more pigments. These pigments may be surface-treated so as to have a self-dispersion capability in an aqueous medium.

Examples of the dyes that can be used include azo dies such as monoazo and disazo dyes, metal complex dyes, naphthol dyes, anthraquinone dyes, indigo dyes, carbonium dyes, quinoimine dyes, cyanine dyes, quinoline dyes, nitro dyes, nitroso dyes, benzoquinone dyes, naphthoquinone dyes, naphthalimide dyes, perinone dyes, phthalocyanine dyes, and triarylmethane dyes.

Examples of the additives that can be used include a polymer dispersant, a viscosity-adjusting agent, a humectant, a defoaming agent, a surfactant, an antiseptic agent, a pH adjusting agent, a cheating agent, a plasticizer, an ultraviolet absorbing agent, and an antioxidant. Besides, an acrylic resin or the like that has been used in a binder for existing ink-jet printing inks can be used.

Examples of the polymer dispersant that can be used include acrylic resins and styrene-acrylic resins, and these resins may be any of random-type, block-type, and graft-type polymers. In the case where the polymer dispersant is used, an acid or a base may be used in combination in order to neutralize the polymer dispersant.

The ink-jet printing ink can be prepared by, for example, any of the following production methods.

(1) A method for preparing an ink, including mixing the pigment or the dye, the aqueous medium, the binder for an ink-jet printing ink, and as required, the additives at one time using a dispersing device.

(2) A method for preparing an ink, including mixing the pigment or the dye, the aqueous medium, and as required, the additives using a dispersing device to prepare an ink precursor composed of an aqueous dispersion of the pigment or the dye, and then mixing the ink precursor composed of the aqueous dispersion of the pigment or the dye with the binder for an ink-jet printing ink, and as required, an aqueous medium and additives using a dispersing device.

The ink precursor containing the pigment, the ink precursor being used in the method for producing an ink described in (2) above, can be prepared by, for example, any of the methods described below.

(i) A method for preparing an ink precursor composed of an aqueous dispersion containing a pigment, the method including preliminarily kneading a pigment and an additive such as a polymer dispersant using a two-roll mill, a mixer, or the like to prepare a kneaded product, and mixing the kneaded product with an aqueous medium using a dispersing device.

(ii) A method for preparing an ink precursor composed of an aqueous dispersion containing a pigment, the method including mixing a pigment with a polymer dispersant using a dispersing device, then depositing the polymer dispersant on the surface of the pigment by controlling the solubility of the polymer dispersant, and further mixing the resulting components using a dispersing device.

(iii) A method for preparing an ink precursor composed of an aqueous dispersion containing a pigment, the method including mixing a pigment with the additive using a dispersing device, and then mixing the resulting mixture with a resin emulsion using a dispersing device.

Examples of the dispersing device that can be used in the production of the ink-jet printing ink include an ultrasonic homogenizer, a high-pressure homogenizer, a paint shaker, a ball mill, a roll mill, a sand mill, a sand grinder, a Dyne-Mill, a Dispermat, an SC mill, and a Nanomizer. These devices may be used alone or in combination of two or more devices.

Coarse particles having a particle diameter of about 250 nm or more may be present in the ink-jet printing ink obtained by the above methods. Such coarse particles may cause clogging of a printer nozzle or the like, resulting in the degradation of an ink ejection property. Therefore, after the preparation of the aqueous dispersion containing a pigment or after the preparation of the ink, it is preferable to remove the coarse particles by a method such as centrifugal separation or filtering.

As the ink-jet printing ink obtained above, an ink having a volume-average particle diameter of 200 nm or less is preferably used. In particular, in the case where an image having higher glossiness such as photographic image quality is formed, the volume-average particle diameter is more preferably in the range of 80 to 120 nm.

The ink-jet printing ink preferably contains 0.2% to 10% by mass of the polyurethane (C), 50% to 95% by mass of the aqueous medium, and 0.5% to 15% by mass of a pigment or a dye relative to the total of the ink-jet printing ink.

The ink-jet printing ink of the present invention obtained by the above methods can be used in ink-jet printing in a dedicated manner using an ink-jet printer, and can be used in ink-jet printing on a base such as paper, a plastic film, or a metal film or sheet. The method of ink jet is not particularly limited, but known methods such as continuous jet methods (e.g., a charge-controlling method and a spray method) and on-demand methods (e.g., a piezoelectric method, a thermal method, and an electrostatic attraction method) can be employed.

Printed matter printed using the ink-jet printing ink of the present invention has excellent abrasion resistance, and thus degradation of a printed image due to detachment of a pigment or the like does not tend to occur. The printed matter also has excellent alkali resistance, and thus it is possible to prevent the generation of blurring or the like due to the adhesion of an alkaline cleaning agent or the like on the surface of a printed image. Furthermore, the printed matter has an image having a high color development density, and thus, for example, the printed matter can be used in various applications such as printed matter obtained by photographic printing by ink-jet printing or high-speed printing by ink-jet printing.

EXAMPLES

The present invention will now be described more specifically by way of Examples and Comparative Examples.

[EXAMPLE 1]

In a vessel which was equipped with a thermometer, a nitrogen gas inlet tube, and a stirrer, and whose atmosphere was replaced with nitrogen, 143.5 parts by mass of a polyether polyol ("PTMG1000" polyoxytetramethylene glycol manufactured by Mitsubishi Chemical Corporation, number-average molecular weight: 1,000), 9.0 parts by mass of 2,2-dimethylol propionic acid, 19.2 parts by mass of 1,4-cyclohexanedimethanol, and 74.8 parts by mass of isophorone diisocyanate were reacted for four hours in the presence of 82.1 parts by mass of methyl ethyl ketone serving as an organic solvent. Subsequently, 50.5 parts by mass of methyl ethyl ketone was added thereto as a diluent solvent, and the reaction was further continued.

At the time when the weight-average molecular weight of the reactant reached in the range of 20,000 to 50,000, 2.2 parts by mass of methanol was charged to terminate the reaction. Furthermore, 66.7 parts by mass of methyl ethyl ketone was added as a. diluent solvent. Thus, an organic solvent solution of a polyurethane (acid value: 15) was obtained. Note that the acid value is a theoretical value calculated on the basis of the amount of acid group-containing compound such as 2,2-dimethylol propionic acid used in the production of the polyurethane.

Next, 7.6 parts by mass of a 48 mass% aqueous potassium hydroxide solution was added to the organic solvent solution of the polyurethane, thereby neutralizing some of or all of carboxyl groups in the polyurethane. Furthermore, 1,059.7 parts by mass of water was added thereto, and the resulting mixture was sufficiently stirred to obtain an aqueous dispersion of a polyurethane.

Next, the aqueous dispersion of the polyurethane was subjected to aging and removal of the solvent. Thus, a binder for an ink-jet printing ink, the binder having a nonvolatile content of 25% by mass, was obtained.

[EXAMPLE 2]

In a vessel which was equipped with a thermometer, a nitrogen gas inlet tube, and a stirrer, and whose atmosphere was replaced with nitrogen, 117.9 parts by mass of a polyether polyol ("PTMG2000" polyoxytetramethylene glycol manufactured by Mitsubishi Chemical Corporation, number-average molecular weight: 2,000), 15.8 parts by mass of 2,2-dimethylol propionic acid, 28.3 parts by mass of 1,4-cyclohexanedimethanol, and 128.9 parts by mass of dicyclohexylmethane diisocyanate were reacted for six hours in the presence of 113.2 parts by mass of N-methyl-2-pyrrolidone (NMP) serving as an organic solvent. Subsequently, 80.8 parts by mass of methyl ethyl ketone was added thereto as a diluent solvent, and the reaction was further continued.

At the time when the percentage of NCO remaining in the reactant reached a theoretical value, the reaction mixture was cooled to 50˚C, and 11.9 parts by mass of triethylamine was added thereto, thereby neutralizing some of or all of carboxyl groups in the resulting polyurethane. Furthermore, 794.4 parts by mass of water was added thereto, and the resulting mixture was sufficiently stirred to obtain an aqueous dispersion of a polyurethane.

Next, 13.0 parts by mass of a 20% aqueous ethylenediamine solution was added to the aqueous dispersion, and the resulting mixture was stirred for two hours or more. Subsequently, 133.3 parts by mass of a 4.8 mass% aqueous potassium hydroxide solution was added thereto, thereby performing a salt exchange with triethylamine, which neutralized some of or all of the carboxyl groups in the polyurethane.

Next, the aqueous dispersion of the polyurethane was subjected to aging and removal of the solvent. Thus, a binder for an ink-jet printing ink, the binder having a nonvolatile content of 30% by mass, was obtained.

[EXAMPLE 3]

In a vessel which was equipped with a thermometer, a nitrogen gas inlet tube, and a stirrer, and whose atmosphere was replaced with nitrogen, 130.6 parts by mass of a polycarbonate diol ("Eternacoll UM-90 (3/1)" a copolymerized carbonate diol of 1,4-cyclohexanedimethanol and 1,6-cyclohexanediol manufactured by Ube Industries, Ltd., number-average molecular weight: about 900), 9.0 parts by mass of 2,2-dimethylol propionic acid, 19.9 parts by mass of neopentyl glycol, and 86.9 parts by mass of isophorone diisocyanate were reacted for four hours in the presence of 164.3 parts by mass of methyl ethyl ketone serving as an organic solvent. Subsequently, 82.1 parts by mass of methyl ethyl ketone was added thereto as a diluent solvent, and the reaction was further continued.

At the time when the weight-average molecular weight of the reactant reached in the range of 20,000 to 50,000, 2.6 parts by mass of methanol was charged to terminate the reaction. Furthermore, 52.2 parts by mass of methyl ethyl ketone was added as a diluent solvent. Thus, an organic solvent solution of a polyurethane was obtained.

Next, 7.6 parts by mass of a 48 mass% aqueous potassium hydroxide solution was added to the organic solvent solution of the polyurethane, thereby neutralizing some of or all of carboxyl groups in the polyurethane. Furthermore, 960.1 parts by mass of water was added thereto, and the resulting mixture was sufficiently stirred to obtain an aqueous dispersion of a polyurethane.

Next, the aqueous dispersion of the polyurethane was subjected to aging and removal of the solvent. Thus, a binder for an ink-jet printing ink, the binder having a nonvolatile content of 25% by mass, was obtained.

[EXAMPLE 4]

In a vessel which was equipped with a thermometer, a nitrogen gas inlet tube, and a stirrer, and whose atmosphere was replaced with nitrogen, 132.0 parts by mass of a polycarbonate diol ("Eternacoll UM-90 (3/1)" a copolymerized carbonate diol of 1,4-cyclohexanedimethanol and 1,6-cyclohexanediol manufactured by Ube Industries, Ltd., number-average molecular weight: about 900), 9.0 parts by mass of 2,2-dimethylol propionic acid, 33.5 parts by mass of 1,4-cyclohexanedimethanol, and 71.9 parts by mass of hexamethylene diisocyanate were reacted for four hours in the presence of 164.3 parts by mass of methyl ethyl ketone serving as an organic solvent. Subsequently, 82.1 parts by mass of methyl ethyl ketone was added thereto as a diluent solvent, and the reaction was further continued.

At the time when the weight-average molecular weight of the reactant reached in the range of 20,000 to 50,000, 2.8 parts by mass of methanol was charged to terminate the reaction. Furthermore, 52.0 parts by mass of methyl ethyl ketone was added as a diluent solvent. Thus, an organic solvent solution of a polyurethane was obtained.

Next, 7.6 parts by mass of a 48 mass% aqueous potassium hydroxide solution was added to the organic solvent solution of the polyurethane, thereby neutralizing some of or all of carboxyl groups in the polyurethane. Furthermore, 960.1 parts by mass of water was added thereto, and the resulting mixture was sufficiently stirred to obtain an aqueous dispersion of a polyurethane.

Next, the aqueous dispersion of the polyurethane was subjected to aging and removal of the solvent. Thus, a binder for an ink-jet printing ink, the binder having a nonvolatile content of 25% by mass, was obtained.

[EXAMPLE 5]

In a vessel which was equipped with a thermometer, a nitrogen gas inlet tube, and a stirrer, and whose atmosphere was replaced with nitrogen, 168.6 parts by mass of a polyether polyol ("PTMG1000" polyoxytetramethylene glycol manufactured by Mitsubishi Chemical Corporation, number-average molecular weight: 1,000), 9.0 parts by mass of 2,2-dimethylol propionic acid, 7.0 parts by mass of 1,4-cyclohexanedimethanol, and 61.9 parts by mass of isophorone diisocyanate were reacted for four hours in the presence of 82.1 parts by mass of methyl ethyl ketone serving as an organic solvent. Subsequently, 50.5 parts by mass of methyl ethyl ketone was added thereto as a diluent solvent, and the reaction was further continued.

At the time when the weight-average molecular weight of the reactant reached in the range of 20,000 to 50,000, 1.8 parts by mass of methanol was charged to terminate the reaction. Furthermore, 67.1 parts by mass of methyl ethyl ketone was added as a diluent solvent. Thus, an organic solvent solution of a polyurethane was obtained.

Next, 7.6 parts by mass of a 48 mass% aqueous potassium hydroxide solution was added to the organic solvent solution of the polyurethane, thereby neutralizing some of or all of carboxyl groups in the polyurethane. Furthermore, 1,059.7 parts by mass of water was added thereto, and the resulting mixture was sufficiently stirred to obtain an aqueous dispersion of a polyurethane.

Next, the aqueous dispersion of the polyurethane was subjected to aging and removal of the solvent. Thus, a binder for an ink-jet printing ink, the binder having a nonvolatile content of 25% by mass, was obtained.

[EXAMPLE 6]

In a vessel which was equipped with a thermometer, a nitrogen gas inlet tube, and a stirrer, and whose atmosphere was replaced with nitrogen, 74.5 parts by mass of a polyether polyol ("PTMG1000" polyoxytetramethylene glycol manufactured by Mitsubishi Chemical Corporation, number-average molecular weight: 1,000), 20.0 parts by mass of 2,2-dimethylol propionic acid, 35.8 parts by mass of 1,4-cyclohexanedimethanol, and 159.0 parts by mass of dicyclohexylmethane diisocyanate were reacted for six hours in the presence of 112.5 parts by mass of N-methyl-2-pyrrolidone (NMP) serving as an organic solvent. Subsequently, 80.4 parts by mass of methyl ethyl ketone was added thereto as a diluent solvent, and the reaction was further continued.

At the time when the percentage of NCO remaining in the reactant reached a theoretical value, the reaction mixture was cooled to 50°C, and 15.1 parts by mass of triethylamine, was added thereto, thereby neutralizing some of or all of carboxyl groups in the resulting polyurethane. Furthermore, 804.5 parts by mass of water was added thereto, and the resulting mixture was sufficiently stirred to obtain an aqueous dispersion of a polyurethane.

Next, 12.9 parts by mass of a 20% aqueous ethylenediamine solution was added to the aqueous dispersion, and the resulting mixture was stirred for two hours or more. Subsequently, 168.5 parts by mass of a 4.8 mass% aqueous potassium hydroxide solution was added thereto, thereby performing a salt exchange with triethylamine, which neutralized some of or all of the carboxyl groups in the polyurethane.

Next, the aqueous dispersion of the polyurethane was subjected to aging and removal of the solvent. Thus, a binder for an ink-jet printing ink, the binder having a nonvolatile content of 30% by mass, was obtained.

[EXAMPLE 7]

In a vessel which was equipped with a thermometer, a nitrogen gas inlet tube, and a stirrer, and whose atmosphere was replaced with nitrogen, 119.7 parts by mass of a polyether polyol ("EXCENOL 1020" polypropylene glycol manufactured by Asahi Glass Co., Ltd., number-average molecular weight: 1,000), 11.9 parts by mass of 2,2-dimethylol propionic acid, 27.2 parts by mass of 1,4-cyclohexanedimethanol, and 86.5 parts by mass of isophorone diisocyanate were reacted for four hours in the presence of 81.7 parts by mass of methyl ethyl ketone serving as an organic solvent. Subsequently, 50.3 parts by mass of methyl ethyl ketone was added thereto as a diluent solvent, and the reaction was further continued.

At the time when the weight-average molecular weight of the reactant reached in the range of 20,000 to 50,000, 2.5 parts by mass of methanol was charged to terminate the reaction. Furthermore, 66.1 parts by mass of methyl ethyl ketone was added as a diluent solvent. Thus, an organic solvent solution of a polyurethane was obtained.

Next, 10.0 parts by mass of a 48 mass% aqueous potassium hydroxide solution was added to the organic solvent solution of the polyurethane, thereby neutralizing some of or all of carboxyl groups in the polyurethane. Furthermore, 1,059.3 parts by mass of water was added thereto, and the resulting mixture was sufficiently stirred to obtain an aqueous dispersion of a polyurethane.

Next, the aqueous dispersion of the polyurethane was subjected to aging and removal of the solvent. Thus, a binder for an ink-jet printing ink, the binder having a nonvolatile content of 25% by mass, was obtained.

[EXAMPLE 8]

In a vessel which was equipped with a thermometer, a nitrogen gas inlet tube, and a stirrer, and whose atmosphere was replaced with nitrogen, 40.1 parts by mass of a polyether polyol ("PTMG1000" polyoxytetramethylene glycol manufactured by Mitsubishi Chemical Corporation, number-average molecular weight: 1,000), 42.3 parts by mass of 2,2-dimethylol propionic acid, 29.1 parts by mass of 1,4-cyclohexanedimethanol, and 121.4 parts by mass of isophorone diisocyanate were reacted for four hours in the presence of 77.6 parts by mass of methyl ethyl ketone serving as an organic solvent. Subsequently, 47.8 parts by mass of methyl ethyl ketone was added thereto as a diluent solvent, and the reaction was further continued.

At the time when the weight-average molecular weight of the reactant reached in the range of 20,000 to 50,000, 3.6 parts by mass of methanol was charged to terminate the reaction. Furthermore, 61.6 parts by mass of methyl ethyl ketone was added as a diluent solvent. Thus, an organic solvent solution of a polyurethane was obtained.

Next, 35.7 parts by mass of a 48 mass% aqueous potassium hydroxide solution was added to the organic solvent solution of the polyurethane, thereby neutralizing some of or all of carboxyl groups in the polyurethane. Furthermore, 1,059.1 parts by mass of water was added thereto, and the resulting mixture was sufficiently stirred to obtain an aqueous dispersion of a polyurethane.

Next, the aqueous dispersion of the polyurethane was subjected to aging and removal of the solvent. Thus, a binder for an ink-jet printing ink, the binder having a nonvolatile content of 25% by mass, was obtained.

[COMPARATIVE EXAMPLE 1]

In a vessel which was equipped with a thermometer, a nitrogen gas inlet tube, and a stirrer, and whose atmosphere was replaced with nitrogen, 152.9 parts by mass of a polyether polyol ("PTMG1000" polyoxytetramethylene glycol manufactured by Mitsubishi Chemical Corporation, number-average molecular weight: 1,000), 20.5 parts by mass of 2,2-dimethylol propionic acid, and 68.0 parts by mass of isophorone diisocyanate were reacted for four hours in the presence of 80.5 parts by mass of methyl ethyl ketone serving as an organic solvent. Subsequently, 47.6 parts by mass of methyl ethyl ketone was added thereto as a diluent solvent, and the reaction was further continued.

At the time when the weight-average molecular weight of the reactant reached in the range of 20,000 to 50,000, 2.0 parts by mass of methanol was charged to terminate the reaction. Furthermore, 52.1 parts by mass of methyl ethyl ketone was added as a diluent solvent. Thus, an organic solvent solution of a polyurethane was obtained.

Next, 17.9 parts by mass of a 48 mass% aqueous potassium hydroxide solution was added to the organic solvent solution of the polyurethane, thereby neutralizing some of or all of carboxyl groups in the polyurethane. Furthermore, 1,073.7 parts by mass of water was added thereto, and the resulting mixture was sufficiently stirred to obtain an aqueous dispersion of a polyurethane.

Next, the aqueous dispersion of the polyurethane was subjected to aging and removal of the solvent. Thus, a binder for an ink-jet printing ink, the binder having a nonvolatile content of 25% by mass, was obtained.

[COMPARATIVE EXAMPLE 2]

In a vessel which was equipped with a thermometer, a nitrogen gas inlet tube, and a stirrer, and whose atmosphere was replaced with nitrogen, 152.9 parts by mass of a polyether polyol ("PTMG2000" polyoxytetramethylene glycol manufactured by Mitsubishi Chemical Corporation, number-average molecular weight: 2,000), 18.8 parts by mass of 2,2-dimethylol propionic acid, 16.4 parts by mass of 1,4-cyclohexanedimethanol, and 54.4 parts by mass of hexamethylene diisocyanate were reacted for four hours in the presence of 80.8 parts by mass of methyl ethyl ketone serving as an organic solvent. Subsequently, 49.7 parts by mass of methyl ethyl ketone was added thereto as a diluent solvent, and the reaction was further continued.

At the time when the weight-average molecular weight of the reactant reached in the range of 20,000 to 50,000, 2.1 parts by mass of methanol was charged to terminate the reaction. Furthermore, 65.7 parts by mass of methyl ethyl ketone was added as a diluent solvent. Thus, an organic solvent solution of a polyurethane was obtained.

Next, 15.8 parts by mass of a 48 mass% aqueous potassium hydroxide solution was added to the organic solvent solution of the polyurethane, thereby neutralizing some of or all of carboxyl groups in the polyurethane. Furthermore, 1,058.6 parts by mass of water was added thereto, and the resulting mixture was sufficiently stirred to obtain an aqueous dispersion of a polyurethane.

Next, the aqueous dispersion of the polyurethane was subjected to aging and removal of the solvent. Thus, a binder for an ink-jet printing ink, the binder having a nonvolatile content of 25% by mass, was obtained.

[COMPARATIVE EXAMPLE 3]

In a vessel which was equipped with a thermometer, a nitrogen gas inlet tube, and a stirrer, and whose atmosphere was replaced with nitrogen, 113.6 parts by mass of a polycarbonate diol ("Eternacoll UM-90 (3/1)" a copolymerized carbonate diol of 1,4-cyclohexanedimethanol and 1,6-cyclohexanediol manufactured by Ube Industries, Ltd. , number-average molecular weight: about 900), 9.0 parts by mass of 2,2-dimethylol propionic acid, 27.4 parts by mass of 1,4-cyclohexanedimethanol, and 96.4 parts by mass of dicyclohexylmethane diisocyanate were reacted for four hours in the presence of 164.3 parts by mass of methyl ethyl ketone serving as an organic solvent. Subsequently, 82.1 parts by mass of methyl ethyl ketone was added thereto as a diluent solvent, and the reaction was further continued.

At the time when the weight-average molecular weight of the reactant reached in the range of 60,000 to 90,000, 2.4 parts by mass of methanol was charged to terminate the reaction. Furthermore, 52.4 parts by mass of methyl ethyl ketone was added as a diluent solvent. Thus, an organic solvent solution of a polyurethane was obtained.

Next, 7.6 parts by mass of a 48 mass% aqueous potassium hydroxide solution was added to the organic solvent solution of the polyurethane, thereby neutralizing some of or all of carboxyl groups in the polyurethane. Furthermore, 960.1 parts by mass of water was added thereto, and the resulting mixture was sufficiently stirred to obtain an aqueous dispersion of a polyurethane.

Next, the aqueous dispersion of the polyurethane was subjected to aging and removal of the solvent. Thus, a binder for an ink-jet printing ink, the binder having a nonvolatile content of 25% by mass, was obtained.

[COMPARATIVE EXAMPLE 4]

In a vessel which was equipped with a thermometer, a nitrogen gas inlet tube, and a stirrer, and whose atmosphere was replaced with nitrogen, 143.5 parts by mass of a polyether polyol ("PTMG1000" polyoxytetramethylene glycol manufactured by Mitsubishi Chemical Corporation, number-average molecular weight: 1,000), 9.0 parts by mass of 2,2-dimethylol propionic acid, 19.2 parts by mass of 1,4-cyclohexanedimethanol, and 74.8 parts by mass of isophorone diisocyanate were reacted for four hours in the presence of 82.1 parts by mass of methyl ethyl ketone serving as an organic solvent. Subsequently, 50.5 parts by mass of methyl ethyl ketone was added thereto as a diluent solvent, and the reaction was further continued.

At the time when the weight-average molecular weight of the reactant reached from 20,000 to 50,000, 2.2 parts by mass of methanol was charged to terminate the reaction. Furthermore, 66.7 parts by mass of methyl ethyl ketone was added as a diluent solvent. Thus, an organic solvent solution of a polyurethane was obtained.

Next, 7.6 parts by mass of a 48 mass% aqueous potassium hydroxide solution was added to the organic solvent solution of the polyurethane, thereby neutralizing some of or all of carboxyl groups in the polyurethane. Furthermore, 1,059.7 parts by mass of water was added thereto, and the resulting mixture was sufficiently stirred to obtain an aqueous dispersion of a polyurethane.

Next, the aqueous dispersion of the polyurethane was subjected to aging and removal of the solvent. Thus, a binder for an ink-jet printing ink, the binder having a nonvolatile content of 25% by mass, was obtained.

[COMPARATIVE EXAMPLE 5]

In a vessel which was equipped with a thermometer, a nitrogen gas inlet tube, and a stirrer, and whose atmosphere was replaced with nitrogen, 97.4 parts by mass of a polyether polyol ("PTMG2000" polyoxytetramethylene glycol manufactured by Mitsubishi Chemical Corporation, number-average molecular weight: 2,000), 13.1 parts by mass of 2,2-dimethylol propionic acid, 23.4 parts by mass of 1,4-cyclohexanedimethanol, and 106.78 parts by mass of dicyclohexylmethane diisocyanate were reacted for six hours in the presence of 93.6 parts by mass of N-methyl-2-pyrrolidone (NMP) serving as an organic solvent. Subsequently, 66.8 parts by mass of methyl ethyl ketone was added thereto as a diluent solvent, and the reaction was further continued.

At the time when the percentage of NCO remaining in the reactant reached a theoretical value, the reaction mixture was cooled to 50˚C, and 9.9 parts by mass of triethylamine was added thereto, thereby neutralizing some of or all of carboxyl groups in the resulting polyurethane. Furthermore, 655.6 parts by mass of water was added thereto, and the resulting mixture was sufficiently stirred to obtain an aqueous dispersion of a polyurethane.

Next, 20.4 parts by mass of a 20% aqueous ethylenediamine solution was added to the aqueous dispersion, and the resulting mixture was stirred for two hours or more. Subsequently, 110.12 parts by mass of a 4.8 mass% aqueous potassium hydroxide solution was added thereto, thereby performing a salt exchange with triethylamine, which neutralized some of or all of the carboxyl groups in the polyurethane.

Next, the aqueous dispersion of the polyurethane was subjected to aging and removal of the solvent. Thus, a binder for an ink-jet printing ink, the binder having a nonvolatile content of 25% by mass, was obtained.

[Measurement of weight-average molecular weight]

The weight-average molecular weight of the polyurethane (C) was measured by gel permeation chromatography (CPC). Specifically, the polyurethane (C) was applied onto a glass plate with a 3-mil applicator, and dried at room temperature for one hour to prepare a semi-dry coating film. The obtained coating film was peeled off from the glass plate, and 0.4 g of the coating film was dissolved in 100 g of tetrahydrofuran. This solution was used as a measurement sample.

A high-performance liquid chromatograph HLC-8220 manufactured by Tosoh Corporation was used as a measuring apparatus. Columns TSK-GEL (HXL-H, G5000HXL, G4000HXL, G3000HXL, and G2000HXL) manufactured by Tosoh Corporation were used as columns in combination.

A calibration curve was prepared using, as standard samples, standard polystyrenes (molecular weight: 4,480,000, 4,250,000, 2,880,000, 2,750,000, 1,850,000, 860,000, 450,000, 411,000, 355,000, 190,000, 160,000, 96,400, 50,000, 37,900, 19,800, 19,600, 5,570, 4,000, 2,980, 2,030, and 500) manufactured by Showa Denko K.K. and Tosoh Corporation.

The weight-average molecular weight was measured with a refractive index (RI) detector using tetrahydrofuran as an eluate and a liquid for dissolving a sample, at a flow rate of 1 mL/min, with an amount of injected sample of 500 $\mu$L, and at a sample concentration of 0.4%.

[Concentration of alicyclic structure]

The concentration of the alicyclic structure was calculated on the basis of the total mass of all the materials, such as the polyol (A) and the polyisocyanate (B), used in the production of each of the polyurethanes obtained in Examples 1 to 8 and Comparative Examples 1 to 5 and the amount of substances of alicyclic structures contained in the alicyclic structure-containing compounds (such as alicyclic structure-containing polyols and an alicyclic structure-containing polyisocyanate) used in the production of the polyurethane (C).

Preparation Example 1 (Aqueous dispersion of quinacridone pigment)

In a planetary mixer PLM-V-50V (manufactured by Inoue MFG., Inc.) having a volume of 50 L, 1,500 g of a vinyl polymer (styrene/acrylic acid/methacrylic acid = 77/10/13 (mass ratio), weight-average molecular weight: 11,000, acid value: 156 mg KOH/g), 4,630 g of a quinacridone pigment (Cromophtal Jet Magenta DMQ manufactured by Ciba Specialty Chemicals), 380 g of phthalimide methylated 3,10-dichloroquinacridone (the average number of phthalimide methyl groups per molecule: 1.4), 2,600 g of diethylene glycol, and 688 g of a 34 mass% aqueous potassium hydroxide solution were charged, and kneading was continued for four hours.

A total amount of 8,000 g of ion exchange water warmed at 60°C was added to the kneaded product over a period of two hours. Thus, a colored resin composition having a nonvolatile content of 37.9% by mass was obtained.

Next, stirring was conducted with a dispersion stirring device while adding 744 g of diethylene glycol and 7,380 g of ion exchange water to 12 kg of the colored resin composition obtained by the above method little by little. Thus, a precursor of an aqueous pigment dispersion (aqueous pigment dispersion before a dispersion treatment) was obtained.

Subsequently, 18 kg of the precursor of the aqueous pigment dispersion was treated with a bead mill (Nanomill hM-G2L, manufactured by Asada Iron Works Co., Ltd., beads; zirconia beads having a diameter $\phi$ of 0.3 mm, amount of beads filled; 85%, cooling water temperature; 10°C, the number of revolutions; 2,660 revolutions/min). The liquid passed through the bead mill was centrifuged at 13,000G for 10 minutes, and was then filtered with a filter having an effective pore diameter of 0.5 $\mu$m. Thus, an aqueous pigment dispersion of the quinacridone pigment was obtained. The concentration of the quinacridone pigment in this aqueous pigment dispersion was 14.9% by mass.

[Preparation of ink-jet printing ink]

Each of the binders for ink-jet printing inks, the binders having been obtained in Examples 1 to 7 and Comparative Examples 1 to 5, the quinacridone pigment obtained in Preparation Example 1, 2-pyrrolidinone, triethylene glycol monobutyl ether, glycerol, a surfactant (Surfynol 440, manufactured by Air Products), and ion exchange water were mixed and stirred in accordance with the mixing ratio described below so that the concentration of the quinacridone pigment was 4% by mass and the concentration of the polyurethane was 1% by mass. Thus, ink-jet printing inks were prepared.

(Mixing ratio of ink-jet printing ink)

· Quinacridone pigment aqueous dispersion obtained in Preparation Example 1 (pigment concentration: 14.9%); 26.8 g
· 2-Pyrrolidinone; 8.0 g
· Triethylene glycol monobutyl ether; 8.0 g
· Glycerol; 3.0 g
· Surfactant (Surfynol 440, manufactured by Air Products); 0.5 g
· Ion exchange water; 48.7 g
· Binder for ink-jet pigment ink obtained in each of Examples 1 to 8 and Comparative Examples 1 to 5 (nonvolatile content: 25% by mass); 4.0 g

[Evaluation of storage stability of ink-jet printing ink]

The storage stability was evaluated on the basis of a viscosity of each of the ink-jet printing inks obtained above and the particle diameter of particles dispersed in the ink. The viscosity was measured with a VISCOMETER TV-22 manufactured by Toki Sangyo Co., Ltd. The particle diameter was measured with a Microtrac UPA EX150 manufactured by Nikkiso Co., Ltd.
Next, the ink was sealed in a glass container such as a screw vial and subjected to a heating test in a thermostatic chamber at 70˚C for four weeks. After this heating test, the viscosity of the ink and the particle diameter of particles dispersed in the ink were measured by the same methods as those described above.
Changes in the viscosity of the ink and the particle diameter after the heating test relative to the viscosity and the particle diameter before the heating test were calculated on the basis of the formulae below to evaluate the storage stability of the pigment ink.
(Formula I)

[(Particle diameter of particles dispersed in ink after heating test)/(Particle diameter of particles dispersed in ink before heating test)] × 100

[Criteria]

○: The ratio of change in the particle diameter was less than 5%.
Δ: The ratio of change in the particle diameter was 5% or more and less than 10%.
×: The ratio of change in the particle diameter was 10% or more.

(Formula II)

[(Viscosity of ink after heating test)/(Viscosity of ink before heating test)] × 100

[Criteria]

○: The ratio of change in the viscosity was less than 2%.
△: The ratio of change in the viscosity was 2% or more and less than 5%.
✕: The ratio of change in the viscosity was 5% or more.

[Evaluation of ink ejection stability]

A diagnostic page was printed with a Photosmart D5360 (manufactured by Hewlett-Packard Company) including a black ink cartridge filled with the above ink-jet pigment ink, and the state of a nozzle was checked. Solid printing in an area of 18 cm × 25 cm per page was then successively performed on 20 pages with a print density setting of 100%. Subsequently, the diagnostic page was again printed to check the state of the nozzle. A change in the state of the nozzle before and after the successive solid printing operations was evaluated as an ink ejection property. The evaluation criteria are described below.

[Criteria]

◎: The state of the nozzle did not change, and no ejection abnormality occurred.
○: Although the ink somewhat adhered to the nozzle, deviation of the ejection direction of the ink did not occur.
△: After solid printing was successively performed on 20 pages, deviation of the ejection direction of the ink and non-ejection of the ink occurred.
✕: In the course of printing, deviation of the ejection direction of the ink and non-ejection of the ink occurred, and the successive printing of 20 pages could not be completed.

[Evaluation of printing performance of pigment ink for ink-jet printing]

(Glossiness)

Solid prinking with a print density setting of 100% was conducted on a printing surface of photo paper (glossy) [HP Advanced Photo Paper manufactured by Hewlett-Packard Company, which is paper dedicated for ink-jet printing, using a commercially available thermal jet-type ink-jet printer (Photosmart D5360; manufactured by Hewlett-Packard Company) including a black ink cartridge filled with the above pigment ink.
The printed matter obtained above was left to stand at room temperature for 24 hours. A glossiness at 20 degrees was then measured at arbitrary three points of the printed matter using a hlicro-haze plus (available from Toyo Seiki Seisaku-sho, Ltd.). The average of the glossiness was calculated.

(Abrasion resistance)

Solid printing with a print density setting of 100% was conducted on a printing surface of photo printing paper (glossy) [HP Advanced Photo Paper manufactured by Hewlett-Packard Company] using a commercially available thermal jet-type ink-jet printer (Photosmart D5360; manufactured by Hewlett-Packard Company) including a black ink cartridge filled with the above pigment ink. Thus, printed matter for evaluation was obtained.
The printed matter for evaluation was dried at room temperature for 10 minutes, and the printed surface was then scratched with a nail at a load of about 5 kg. The degree of scratching of the color and the like of the printed surface was evaluated by visual observation in accordance with the criteria described below. For inks with which the printed matter for evaluation could not be obtained due to insufficient ejection stability thereof, a comment "Printing could not be performed" is given in the table below.

[Criteria]

A: No scratches were observed on the printed surface, and detachment of a colorant and the like was also not observed.

B: Although some scratches were formed on the printed surface, the scratches were of a level that would not cause a practical problem and detachment of a colorant and the like was not observed.
C: Some scratches were formed on the printed surface, and detachment of a colorant and the like was also observed.
D: Significant scratches were formed in an area of about 50% or more of the printed surface, and detachment of a colorant and the like was also observed.

[Chemical resistance]

(Alkali resistance)

The printed matter for evaluation was dried at room temperature for 10 minutes. Three drops of a 0.5 mass% aqueous KOH solution were then dropped on the printed surface with a pipette. Ten seconds later, the printed surface was rubbed with a finger, and the surface state of the printed surface was evaluated with visual observation. The evaluation criteria are described below. For inks with which the printed matter for evaluation could not be obtained due to insufficient ejection stability thereof, a comment "Printing could not be performed" is given in the table below.

[Criteria]

A: No detachment of a colorant and the like was observed on the printed surface, and discoloration of the printed surface was also not observed.
B: Although detachment of a colorant and the like was not observed on the printed surface, discoloration, of the printed surface slightly occurred.
C: Detachment of a colorant and the like somewhat occurred on the printed surface, and discoloration of the printed surface also occurred.
D: Significant detachment of a colorant and the like occurred in an area of about 50% or more of the printed surface, and discoloration of the printed surface also occurred.

(Alcohol resistance)

The printed matter for evaluation was dried at room temperature for 10 minutes. Three drops of a 5 mass% aqueous ethanol solution were then dropped on the printed surface with a pipette. Ten seconds later, the printed surface was rubbed with a finger, and the surface state of the printed surface was evaluated with visual observation. The evaluation criteria are described below. For inks with which the printed matter for evaluation could not be obtained due to insufficient ejection stability thereof, a comment "Printing could not be performed" is given in the table below.

[Criteria]

A: No detachment of a colorant and the like was observed on the printed surface, and discoloration of the printed surface was also not observed.
B: Although detachment of a colorant and the like was not observed on the printed surface, discoloration of the printed surface slightly occurred.
C: Detachment of a colorant and the like somewhat occurred on the printed surface, and discoloration of the printed surface also occurred.
D: Significant detachment of a colorant and the like occurred in an area of about 50% or more of the printed surface, and discoloration of the printed surface also occurred.

[Table 1]

| Table 1 | Example 1 | Example 2 | Example 3 | Example 4 | Example 5 |
|---|---|---|---|---|---|
| Alicyclic structure-containing polyol (a1-1) | CHDM | CHDM | - | CHDM | CHDM |
| Alicyclic structure-containing polyol (a1-2) | - | - | Eternacoll UM-90 (3/1) | Eternacoll UM-90 (3/1) | - |
| Hydrophilic group-containing polyol (a2) | DMPA | DMPA | DMPA | DMPA | DMPA |
| Other polyol (a3) | PTMG1000 | PTMG2000 | NPG | - | PTMG1000 |
| Polyisocyanate (B) | IPDI | H12-MDI | IPDI | HDI | IPDI |
| Chain extender | - | EDA | - | - | - |
| Neutralizing agent | KOH | KOH | KOH | KOH | KOH |
| Concentration of alicyclic structure derived from polyol (al-1) [mmol/kg] | 532 | 675 | 0 | 602 | 194 |
| Concentration of alicyclic structure derived from polyol (a1-2) [mmol/kg] | 0 | 0 | 1,687 | 2,472 | 0 |
| Concentration of alicyclic structure present in total amount of polyurethane [mmol/kg] | 1,877 | 4,053 | 3,250 | 3,075 | 1,307 |
| Acid value | 15 | 22 | 15 | 15 | 15 |
| Weight-average molecular weight | 36,000 | 80,000 | 42,000 | 38,000 | 37,000 |
| Storage stability | | | | | |
| Change in particle diameter | ○ | ○ | ○ | ○ | ○ |
| Change in viscosity | ○ | ○ | ○ | ○ | ○ |
| Ink ejection property | ⊙ | ○ | ○ | ○ | ⊙ |
| Printing performance | | | | | |
| Glossiness | 65 | 62 | 63 | 64 | 62 |
| Abrasion resistance | A | A | A | A | A |
| Alkali resistance | A | A | A | A | B |
| Alcohol resistance | A | C | A | A | B |

[Table 2]

| Table 2 | Example 6 | Example 7 | Example 8 |
|---|---|---|---|
| Alicyclic structure-containing polyol (a1-1) | CHDM | CHDM | CHDM |
| Alicyclic structure-containing polyol (a1-2) | - | - | - |
| Hydrophilic group-containing polyol (a2) | DMPA | DMPA | DMPA |
| Other polyol (a3) | PTMG1000 | PPG1000 | PTMG1000 |
| Polyisocyanate (B) | H12-MDI | IPDI | IPDI |
| Chain extender | EDA | - | - |
| Neutralizing agent | KOH | KOH | KOH |
| Concentration of alicyclic structure derived from polyol (a1-1) [mmol/kg] | 828 | 755 | 808 |
| Concentration of alicyclic structure derived from polyol (a1-2) [mmol/kg] | 0 | 0 | 0 |
| Concentration of alicyclic structure present in total amount of polyurethane [mmol/kg] | 4,869 | 2,310 | 2,992 |
| Acid value | 28 | 20 | 75 |
| Weight-average molecular weight | 90,000 | 39,000 | 35,000 |
| Storage stability | | | |
| Change in particle diameter | ○ | ○ | ○ |
| Change in viscosity | ○ | ○ | ○ |
| Ink ejection property | ○ | ○ | ○ |
| Printing performance | | | |
| Glossiness | 62 | 65 | 62 |
| Abrasion resistance | A | A | A |
| Alkali resistance | A | A | B |
| Alcohol resistance | C | A | A |

[Table 3]

| Table 3 | Comparative Example 1 | Comparative Example 2 | Comparative Example 3 | Comparative Example 4 | Comparative Example 5 |
|---|---|---|---|---|---|
| Alicyclic structure-containing polyol (a1-1) | - | CHDM | CHDM | CHDM | CHDM |
| Alicyclic structure-containing polyol (a1-2) | - | - | Eternacoll UM-90 (3/1) | - | - |
| Hydrophilic group-containing polyol (a2) | DMPA | DMPA | DMPA | DMPA | DMPA |
| Other polyol (a3) | PTMG1000 | PTMG2000 | | PTMG1000 | PTMG1000 |

(continued)

| Table 3 | Comparative Example 1 | Comparative Example 2 | Comparative Example 3 | Comparative Example 4 | Comparative Example 5 |
|---|---|---|---|---|---|
| Polyisocyanate (B) | IPDI | HDI | H12-MDI | IPDI | H12-N1DI |
| Chain extender | - | - | - | - | EDA |
| Neutralizing agent | KOH | KOH | KOH | KOH | KOH |
| Concentration of alicyclic structure derived from polyol (a1-1) [mmol/kg] | 0 | 453 | 493 | 532 | 649 |
| Concentration of alicyclic structure derived from polyol (a1-2) [mmol/kg] | 0 | 0 | 2,127 | 0 | 0 |
| Concentration of alicyclic structure present In total amount of polyurethane [mmol/kg] | 1,223 | 453 | 5,560 | 1,877 | 4,058 |
| Acid value | 35 | 32 | 15 | 15 | 22 |
| Weight-average molecular weight | 41,000 | 39,000 | 80,000 | 27,000 | 210,000 |
| Storage stability | | | | | |
| Change in particle diameter | ○ | ○ | Δ | ○ | ○ |
| Change in viscosity | ○ | ○ | Δ | ○ | Δ |
| Ink ejection property | ○ | ○ | × | ⊙ | × |
| Printing performance | | | | | |
| Glossiness | 65 | 62 | 60 | 63 | 60 |
| Abrasion resistance | B | B | Printing could not be performed, | C | Printing could not be performed. |
| Alkali resistance | C | D | Printing could not be performed, | C | Printing could not be performed. |
| Alcohol resistance | D | D | Printing could not be performed, | B | Printing could not be performed. |

Abbreviations in Tables 1 to 3 will be described below.

"CHDM"; 1,4-Cyclohexanedimethanol
"DMPA"; 2,2-Dimethylol propionic acid
"NPG"; Neopentyl glycol
"PTMG2000"; Polyoxytetramethylene glycol manufactured by Mitsubishi Chemical Corporation, Number-average molecular weight: 2,000
"Eternacoll UM-90 (3/1)"; Copolymerized carbonate diol of 1,4-cyclohexanedimethanol and 1,6-cyclohexanediol manufactured by Ube Industries, Ltd., Number-average molecular weight: about 900
"PPG1000"; Polypropylene glycol manufactured by Asahi Glass Co., Ltd. ("EXCENOL 1020", Number-average molecular weight: 1,000)
"IPDI"; Isophorone diisocyanate
"H12-MDI"; Dicyclohexylmethane diisocyanate
"HDI"; Hexamethylene diisocyanate
"EDA"; Ethylenediamine

## Claims

1. A binder for an ink-jet printing ink, the binder comprising an aqueous medium (D); and a polyurethane (C) having a weight-average molecular weight of 30,000 to 200,000 and obtained by reacting a polyol (A) containing an alicyclic structure-containing polyol (a1) and a hydrophilic group-containing polyol (a2) with a polyisocyanate (B), the polyurethane (C) being dispersed in the aqueous medium (D), wherein a ratio of an alicyclic structure contained in the polyurethane (C) relative to the total mass of the polyurethane (C) is 1,000 to 5,500 mmol/kg.

2. The binder for an ink-jet printing ink according to Claim 1, wherein the alicyclic structure-containing polyol (a1) is at least one selected from the group consisting of an alicyclic structure-containing polyol (a1-1) having a molecular weight of 100 to 500 and an alicyclic structure-containing polycarbonate polyol (a1-2) having a molecular weight of 800 to 3,000.

3. The binder for an ink-jet printing ink according to Claim 1, wherein the polyol (A) contains the alicyclic structure-containing polyol (a1) the hydrophilic group-containing polyol (a2), and another polyol (a3), and the other polyol (a3) is at least one selected from the group consisting of polyether polyols and polycarbonate polyols.

4. An ink-jet printing ink comprising the binder for an ink-jet printing ink according to any one of Claims 1 to 3; and a pigment or a dye.

5. Printed matter printed with the ink-jet printing ink according to Claim 4.

**INTERNATIONAL SEARCH REPORT**

| | International application No. |
|---|---|
| | PCT/JP2010/059835 |

A. CLASSIFICATION OF SUBJECT MATTER
*C09D11/00*(2006.01)i, *B41J2/01*(2006.01)i, *B41M5/00*(2006.01)i, *C08G18/32* (2006.01)i

According to International Patent Classification (IPC) or to both national classification and IPC

B. FIELDS SEARCHED

Minimum documentation searched (classification system followed by classification symbols)
C09D11/00, B41J2/01, B41M5/00, C08G18/32

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2000-248213 A (Mitsubishi Chemical Corp.), 12 September 2000 (12.09.2000), claims; paragraphs [0017], [0028] to [0032], [0047] (Family: none) | 1-5 |
| Y | JP 2005-515289 A (E.I. Du Pont De Nemours & Co.), 26 May 2005 (26.05.2005), claims; paragraphs [0038] to [0042], [0050] to [0054], [0058] & WO 2003/062331 A1   & US 2003/0184629 A1 & AU 2003212810 A1   & EP 1465956 A1 | 1-5 |

☒ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 23 June, 2010 (23.06.10) | 06 July, 2010 (06.07.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 2 452 988 A1**

## INTERNATIONAL SEARCH REPORT

| International application No. |
|---|
| PCT/JP2010/059835 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2007-254556 A  (Toyo Ink Manufacturing Co., Ltd.), 04 October 2007 (04.10.2007), claims; paragraphs [0023] to [0024], [0029], [0033] to [0034], [0041], [0044], [0068] (Family: none) | 1-5 |
| Y | JP 2004-043722 A  (Hitachi Chemical Co., Ltd.), 12 February 2004 (12.02.2004), claims; paragraphs [0002], [0008], [0011] (Family: none) | 1-5 |
| Y | JP 2008-081606 A  (Nissan Motor Co., Ltd.), 10 April 2008 (10.04.2008), claims; paragraphs [0001], [0009] & EP 1905790 A1         & CN 101157814 A & US 2008/0268286 A1     & DE 602007000769 E | 1-5 |
| A | JP 11-166148 A  (Nippon Polyurethane Industry Co., Ltd.), 22 June 1999 (22.06.1999), claims; paragraphs [0016] to [0019], [0026], [0055], [0062] (Family: none) | 1-5 |
| A | JP 2001-055479 A  (Kuraray Co., Ltd.), 27 February 2001 (27.02.2001), claims; paragraphs [0010] to [0014], [0017], [0022], [0065] (Family: none) | 1-5 |
| P,A | JP 2009-242646 A  (Arakawa Chemical Industries, Ltd.), 22 October 2009 (22.10.2009), claims; paragraphs [0015] to [0018], [0031], [0041] (Family: none) | 1-5 |

Form PCT/ISA/210 (continuation of second sheet) (July 2009)

23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000001639 A